# EUROPÄISCHE PATENTANMELDUNG

(11) **EP 1 233 604 A2**
(43) Veröffentlichungstag der Anmeldung: **21.08.2002**
(21) Anmeldenummer: 02090020.5
(22) Anmeldetag: 17.01.2002
(51) Int. Cl.: H04M 15/00, H04M 3/54

(54) **Verfahren zum Abrechnen von Telekommunikationsverbindungen bei Anrufweiterleitungdiensten**

(30) Priorität: 20.02.2001 DE 10109906
(71) Anmelder: SIEMENS AKTIENGESELLSCHAFT, 80333 München (DE)
(72) Erfinder: Berg, Andreas, Dr., 13591 Berlin (DE); Heine, Ronald, 15370 Fredersdorf (DE)

(57) **Zusammenfassung**

Die Erfindung betrifft ein Verfahren zum Abrechnen von Telekommunikationsverbindungen in einem Kommunikationsnetz (HPLMN), bei dem bei Auftreten einer Aufbauforderüng (1) für eine an ein Kommunikationsendgerät (B) gerichtete, für ein Gebührenkonto (GK-B) des Kommunikationsendgerätes (B) gebührenpflichtige Kommunikationsverbindung (5) in einem Netzknoten (SCP) des Kommunikationsnetzes (HPLMN) Ablaufschritte (AS) zum Aufbau der Kommunikationsverbindung (5) und Weiterleitungs-Ablaufschritte (W-AS) zum Aufbau einer Weiterleitungs-Kommunikationsverbindung (7) vorgenommen werden.

Um auch beim Roaming stets sicher und zuverlässig die Abrechnung von Telekommunikationsgebühren vorzunehmen, wird während der Weiterleitungs-Ablaufschritte (W-AS) eine Weiterleitungsinformation in einem Speicher-Netzknoten (SCP) des Kommunikationsnetzes gespeichert und eine Belastung des Gebührenkontos (GK-B) des Kommunikationsendgerätes (B) mit Kommunikationsgebühren für die Kommunikationsverbindung (5) unterbunden, wenn in dem Speicher-Netzknoten (SCP) die Weiterleitungsinformation gespeichert ist.

## Beschreibung

Die Erfindung betrifft ein Verfahren zum Abrechnen von Telekommunikationsverbindungen in einem Kommunikationsnetz, bei dem bei Auftreten einer Aufbauforderung für eine an ein Kommunikationsendgerät gerichtete, für ein Gebührenkonto des Kommunikationsendgerätes gebührenpflichtige Kommunikationsverbindung in einem Netzknoten des Kommunikationsnetzes mit einer Ablaufsteuerungsfunktion und einer Weiterleitungs-Ablaufsteuerungsfunktion Ablaufschritte zum Aufbau der Kommunikationsverbindung vorgenommen werden und bei Vorliegen eines Anrufweiterleitungdienstes für das Kommunikationsendgerät in dem Netzknoten des Kommunikationsnetzes Weiterleitungs-Ablaufschritte zum Aufbau einer Weiterleitungs-Kommunikationsverbindung vorgenommen werden.

Es ist beispielsweise für GSM-Kommunikationsnetze (GSM = Global System for Mobile Communication) allgemein bekannt, dass an ein Kommunikationsendgerät (Handy) gerichtete, für ein Gebührenkonto des Kommunikationsendgerätes gebührenpflichtige Kommunikationsverbindungen auftreten können. Dies ist beispielsweise dann der Fall, wenn sich das Kommunikationsendgerät außerhalb seines Heimat-Kommunikationsnetzes (HPLMN = Home Public Land Mobile Network) befindet und in einem Fremd-Kommunikationsnetz (z. B. im Ausland) angemeldet (eingebucht) ist. Wird nun das Kommunikationsendgerät aus dem Heimat-Kommunikationsnetz heraus angerufen, so wird der Ruf von dem Heimat-Kommunikationsnetz an das Fremd-Kommunikationsnetz weitergeleitet (Roaming). In diesem Fall zahlt der Anrufer lediglich Gebühren in einer in dem Heimat-Kommunikationsnetz für netzinterne Gespräche üblichen Höhe; dem Gebührenkonto des sich in dem Fremd-Kommunikationsnetz befindenden Kommunikationsendgerätes werden darüber hinaus Zusatzgebühren für die Weiterleitung des Rufes zu dem Fremd-Kommunikationsnetz berechnet.

Für das am Fremd-Kommunikationsnetz angemeldete Kommunikationsendgerät kann im Heimat-Kommunikationsnetz ein sogenannter Anrufweiterleitungsdienst (Call forwarding Service) verwendet werden. Dann können in einem Netzknoten des Heimat-Kommunikationsnetzes, der eine Ablaufsteuerungsfunktion und einer Weiterleitungs-Ablaufsteuerungsfunktion aufweist, aufgrund der Aufbauforderung für die Kommunikationsverbindung Ablaufschritte zum Aufbau der Kommunikationsverbindung vorgenommen werden und aufgrund des Vorliegens des Anrufweiterleitungdienstes Weiterleitungs-Ablaufschritte zum Aufbau einer Weiterleitungs-Kommunikationsverbindung vorgenommen werden.

Aufgrund des Anrufweiterleitungsdienstes wird die für das Kommunikationsendgerät gebührenpflichtige Kommunikationsverbindung (beispielsweise von dem Heimat-Kommunikationsnetz in das Fremd-Kommunikationsnetz) gar nicht aufgebaut; vielmehr wird eine Weiterleitungs-Kommunikationsverbindung zu einem von dem Anrufweiterleitungsdienst vorgegebenen Ziel aufgebaut. Da in dem Netzknoten des (Heimat-)Kommunikationsnetzes jedoch die Ablaufschritte zum Aufbau der gebührenpflichtigen Kommunikationsverbindung ablaufen, ist es möglich, dass von diesen Ablaufschritten eine Vergebührung dieser gebührenpflichtigen Kommunikationsverbindung vorgenommen wird.

Der Erfindung liegt die Aufgabe zugrunde, ein Verfahren anzugeben, mit dem auch beim Roaming stets sicher und zuverlässig die Abrechnung von Telekommunikationsgebühren vorgenommen werden kann.

Diese Aufgabe wird bei einem Verfahren der eingangs angegebenen Art erfindungsgemäß dadurch gelöst, dass während der Weiterleitungs-Ablaufschritte eine Weiterleitungsinformation in einem Speicher-Netzknoten des Kommunikationsnetzes gespeichert wird und eine Belastung des Gebührenkontos des Kommunikationsendgerätes mit Kommunikationsgebühren für die Kommunikationsverbindung unterbunden wird, wenn in dem Speicher-Netzknoten die Weiterleitungsinformation gespeichert ist. Dadurch werden in vorteilhafter Weise bei Vorliegen eines Anrufweiterleitungsdienstes für die gebührenpflichtige Kommunikationsverbindung dem Kommunikationsendgerät keine Kommunikationsgebühren berechnet.

Das erfindungsgemäße Verfahren kann derart ausgestaltet sein, dass bei Beendigung der Ablaufschritte bei gespeicherter Weiterleitungsinformation diese Weiterleitungsinformation gelöscht wird. Ebenso kann das Verfahren derart ausgestaltet sein, dass bei Beendigung der Weiterleitungs-Ablaufschritte die Weiterleitungsinformation gelöscht wird. Bei den beiden vorgenannten Ausgestaltungsformen des erfindungsgemäßen Verfahrens ist insbesondere vorteilhaft, dass nach Beendigung der Ablaufschritte bzw. nach Abschluss der Weiterleitungskommunikationsverbindung die Weiterleitungsinformation gelöscht wird und dadurch im weiteren kein Speicherplatz durch diese Weiterleitungsinformation belegt wird.

Das erfindungsgemäße Verfahren kann so ausgestaltet sein, dass die Weiterleitungsinformation gespeichert wird, indem ein dem Kommunikationsendgerät zuordenbares Binär-Speicherelement gesetzt wird und die Weiterleitungsinformation gelöscht wird, indem das Binär-Speicherelement rückgesetzt wird. Durch die Nutzung eines Binär-Speicherelementes (beispielsweise eines sog. Flags) kann die Weiterleitungsinformation mit geringem technischen Aufwand gespeichert werden.

Das erfindungsgemäße Verfahren kann auch so ausgestaltet sein, dass als Gebührenkonto des Kommunikationsendgerätes ein vorausbezahltes Guthaben-Gebührenkonto verwendet wird. Gerade bei der Nutzung eines Kommunikationsverfahrens mit vorausbezahlten Guthabengebührenkonten (PPS = Prepaidservice) ist eine sichere, zuverlässige und korrekte Abrechnung der Kommunikationsgebühren besonders wichtig, da bei einem PPS-Verfahren die Kommunikationsgebühren bereits während des Bestehens der Kommunikationsverbindung von dem Konto abgebucht werden (Online-Charging) und eine spätere Korrektur einer Gebührenabbuchung nur unter großem Aufwand möglich ist.

Das Verfahren kann auch derart ausgestaltet sein, dass als Speicher-Netzknoten der Netzknoten des Kommunikationsnetzes mit der Ablaufsteuerungsfunktion und der Weiterleitungs-Ablaufsteuerungsfunktion verwendet wird. Hierbei ist vorteilhaft, dass die Weiterleitungsinformation in demselben Netzknoten gespeichert wird, in dem auch die Ablaufschritte und die Weiterleitungsablaufschritte gesteuert werden, so dass zum Abspeichern und Löschen der Weiterleitungsinformation kein Nachrichtenaustausch zwischen verschiedenen Netzknoten des Kommunikationsnetzes notwendig ist.

In einer besonderen Ausgestaltungsform des erfindungsgemäßen Verfahrens kann als Netzknoten des Kommunikationsnetzes mit der Ablaufsteuerungsfunktion und der Weiterleitungs-Ablaufsteuerungsfunktion ein Dienstesteuerpunkt verwendet werden, wobei das Kommunikationsnetz eine Struktur eines Intelligenten Netzes aufweist. Hierbei ist vorteilhaft, dass in einem Dienstesteuerpunkt eines intelligenten Netzes das erfindungsgemäße Verfahren relativ einfach und kostengünstig realisiert werden kann.

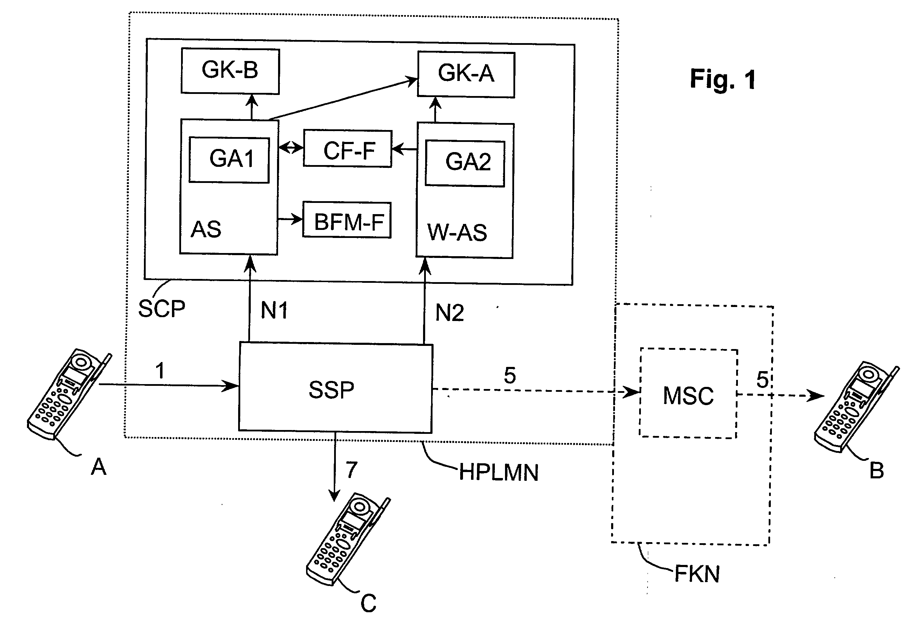

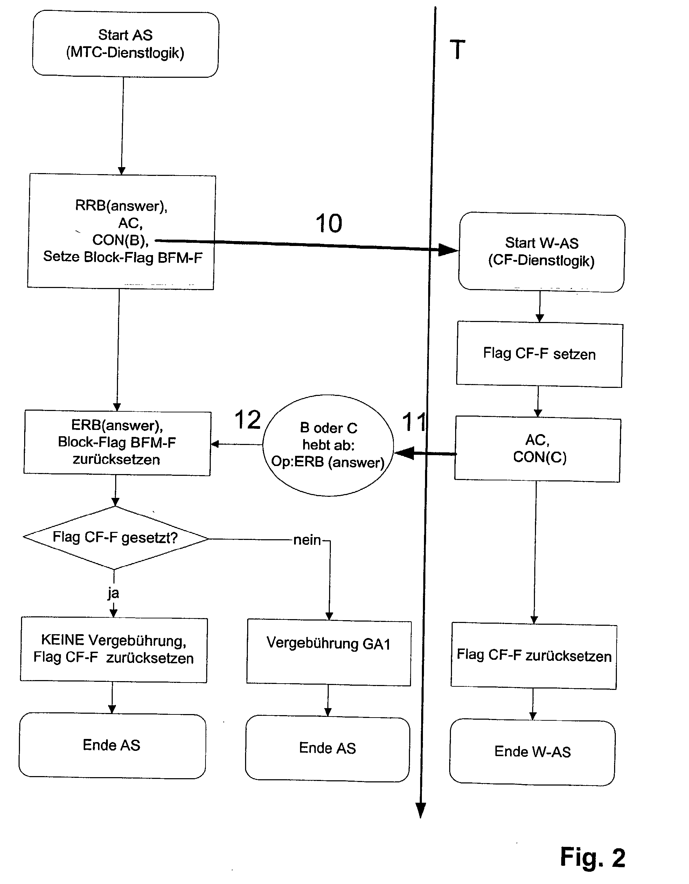

Zur weiteren Erläuterung der Erfindung sind in Figur 1 schematisch ein Ausschnitt aus Kommunikationsnetzen zur Anwendung des beschriebenen Verfahrens und in Figur 2 Ablaufpläne der Ablaufschritte der Ablaufsteuerungsfunktion und der Weiterleitungs-Ablaufschritte der Weiterleitungs-Ablaufsteuerungsfunktion gezeigt.

In Figur 1 ist ein Anrufer-Kommunikationsendgerät A dargestellt, welches einem Heimat-Kommunikationsnetz HPLMN zugeordnet ist. Von diesem Anrufer-Kommunikationsendgerät A aus soll eine Kommunikationsverbindung zu einem ebenfalls dem Heimat-Kommunikationsnetz HPLMN zugehörigen Kommunikationsendgerät B aufgebaut werden, wobei das Kommunikationsendgerät B in einem Fremd-Kommunikationsnetz FKN angemeldet (eingebucht) ist. Zu diesem Zweck sendet das Anrufer-Kommunikationsendgerät A eine Aufbauforderung 1 an eine Vermittlungsstelle SSP des Heimat-Kommunikationsnetzes HPLMN. In diesem Ausführungsbeispiel besitzt das Heimat-Kommunikationsnetz HPLMN eine Struktur eines sog. Intelligenten Netzes (IN - intelligent network) und die Vermittlungsstelle SSP arbeitet als sog. Dienstevermittlungspunkt (SSP= service switching point). Zur Herstellung der gewünschten Kommunikationsverbindung zwischen dem Anrufer-Kommunikationsendgerät A und dem Kommunikationsendgerät B wird von dem Dienstevermittlungspunkt SSP eine Nachricht N1 an einen Dienstesteuerungspunkt SCP gesandt. Bei dem Dienstesteuerungspunkt SCP handelt es sich um einen Netzknoten des Heimat-Kommunikationsnetzes HPLMN, welcher eine Ablaufsteuerungsfunktion zur Steuerung des Aufbaus der Kommunikationsverbindung besitzt. Aufgrund der zu dem Dienstesteuerungspunkt SCP übertragenen Nachricht N1 werden in dem Dienstesteuerungspunkt SCP Ablaufschritte AS zum Aufbau der Kommunikationsverbindung zwischen dem Anrufer-Kommunikationsendgerät A und dem Kommunikationsendgerät B vorgenommen. Diese Ablaufschritte AS sind in der Figur 1 schematisch als Element mit der Bezeichnung "AS" dargestellt.

Die Kommunikationsverbindung zwischen dem Anrufer-Kommunikationsendgerät A und dem Kommunikationsendgerät B kann für das Kommunikationsendgerät B gebührenpflichtig sein. Eine solche Gebührenpflichtigkeit für das angerufene Kommunikationsendgerät ist beispielsweise dann gegeben, wenn sich das Kommunikationsendgerät B nicht in seinem Heimat-Kommunikationsnetz befindet, sondern in einem Fremd-Kommunikationsnetz (z. B. im Ausland). Dies ist allerdings nur ein Beispiel für eine für ein angerufenes Kommunikationsendgerät gebührenpflichtige Kommunikationsverbindung. Ebenso ist es möglich, dass auch bei Kommunikationsverbindungen innerhalb nur eines Kommunikationsnetzes für den angerufenen Teilnehmer Kommunikationsgebühren entstehen; auch in einem derartigen Fall kann das beschriebene Verfahren eingesetzt werden.

Bei dem in Figur 1 dargestellten Fall beinhalten die Ablaufschritte AS einen Schritt GA1 zur Gebührenabrechnung für die Kommunikationsgebühren, mit denen das Kommunikationsendgerät B belastet wird. Aus Sicht des Kommunikationsendgerätes B läge ein ankommender Ruf vor (MTC = mobile terminating call). Daher wird der Schritt GA1 zur Gebührenabrechnung auch Gebührenabrechnung für MTC bezeichnet und die Ablaufschritte AS werden auch als MTC-Dienstlogik bezeichnet.

Würde tatsächlich eine - in der Figur 1 gestrichelt dargestellte - Kommunikationsverbindung 5 zwischen dem Anrufer-Kommunikationsendgerät A und dem Kommunikationsendgerät B hergestellt (ggf. unter Verwendung weiterer Vermittlungsstellen MSC des Fremd-Kommunikationsnetzes), so würde der Schritt GA1 zur Gebührenabrechnung die dem Kommunikationsendgerät B entstehenden Kommunikationsgebühren abrechnen und ein dem Kommunikationsendgerät B zugeordnetes Gebührenkonto GK-B mit diesen Gebühren belasten. Jedoch wird in dem vorliegenden Fall gar keine Kommunikationsverbindung 5 aufgebaut, da für das Kommunikationsendgerät B ein Anrufweiterleitungsdienst besteht. Dieser Anrufweiterleitungsdienst hat die Aufgabe, an das Kommunikationsendgerät B gerichtete Kommunikationsverbindungen nicht zu dem Kommunikationsendgerät B durchzuschalten, sondern eine Weiterleitungs-Kommunikationsverbindung 7 zu einem Ziel-Kommunikationsendgerät C aufzubauen. Ein solcher Anrufweiterleitungsdienst wird auch als call forwarding (CF)-Service bezeichnet. In dem dargestellten Fall liegt eine Anrufweiterleitung vor, die unabhängig vom Vorliegen von Bedingungen stets auszführen ist, ein sog. call forwarding unconditional CFu. Das Verfahren ist jedoch ebenfalls anwendbar bei anderen Arten von Weiterleitungsdiensten, also beispielsweise bei einer Weiterleitung in einem Falle, dass an dem Kommunikationsendgerät B bereits telefoniert wird (call forwarding busy); in einem Falle, dass am Kommunikationsendgerät B ein Anruf nicht entgegengenommen wird (call forwarding no answer) oder in einem Falle, dass das Kommunikationsendgerät B nicht erreicht werden kann (call forwarding not reachable). Der letztgenannte Fall kann beispielsweise auftreten, wenn das Kommunikationsendgerät ausgeschaltet ist oder wenn am Ort des Kommunikationsendgerätes B keine ausreichende Netzdeckung vorhanden ist. Informationen über die genaue Art des jeweils vorhandenen Anrufweiterleitungsdienstes sind im Heimat-Kommunikationsnetz HPLMN in einem speziellen Netzknoten, beispielsweise im Heimatregister HLR (HLR = home location register) gespeichert. Dieses ist in der Figur 1 nicht dargestellt.

Der Dienstevermittlungspunkt SSP bekommt vom Heimatregister HLR Informationen über den in diesem Beispiel bestehenden Anruf-Weiterleitungsdienst call forwarding unconditional übermittelt (in der Figur 1 nicht dargestellt) und sendet daraufhin eine weitere Nachricht N2 an den Dienstesteuerungspunkt SCP. Der Dienstesteuerungspunkt SCP aktiviert daraufhin seine Weiterleitungs-Ablaufsteuerungsfunktion und nimmt Weiterleitungsablaufschritte W-AS vor; diese Weiterleitungsablaufschritte W-AS sind in der Figur 1 schematisch als Element mit der Bezeichnung "W-AS" dargestellt. Die Weiterleitungsablaufschritte W-AS beinhalten einen Schritt GA2 zur Gebührenabrechnung für die Anrufweiterleitung. Die ablaufenden Weiterleitungsablaufschritte W-AS sorgen dafür, dass von dem Dienstevermittlungspunkt SSP die Weiterleitungskommunikationsverbindung 7 zu dem Ziel-Kommunikationsendgerät C aufgebaut wird. Die dazu notwendige Adresse des Ziel-Kommunikationsendgerätes C wurde zuvor ebenfalls vom nicht dargestellten Heimatregister HLR an den Dienstevermittlungspunkt SSP übermittelt. Da das Ziel-Kommunikationsendgerät C genau wie das Anruf-Kommunikationsendgerät A im Heimatkommunikationsnetz HPLMN angemeldet (eingebucht) ist, werden in dem dargestellten Fall nur die Gebühren für eine innerhalb des Heimät-Kommunikationsnetzes HPLMN aufzubauende Kommunikationsverbindung fällig. Diese Gebühren werden dem Anrufer-Kommunikationsendgerät A von dem Schritt GA2 zur Gebührenabrechnung für die Anrufweiterleitung der Weiterleitungsablaufschritte W-AS berechnet und ein Anrufer-Gebührenkonto GK-A wird mit diesen Gebühren belastet. Der Schritt zur Gebührenabrechnung GA1 jedoch soll dem Kommunikationsendgerät B keine Kommunikationsgebühren berechnen, da die Kommunikationsverbindung 5 zum Kommunikationsendgerät B nicht aufgebaut wurde. Zu diesem Zweck ist in dem Dienstesteuerungspunkt SCP (welcher hier als Speicher-Netzknoten dient) als Binär-Speicherelement ein Flag CF-F für die Speicherung einer Weiterleitungsinformation und zusätzlich als eine weitere Speicherstelle ein Block-Flag BFM-F vorhanden. Auf das Flag LF-F können sowohl die Ablaufschritte AS als auch die Weiterleitungsablaufschritte W-AS zugreifen. Das genaue Zusammenspiel zwischen den Ablaufschritten AS, dem Flag CF-F und den Weiterleitungs-Ablaufschritten W-AS ist in Figur 2 dargestellt.

In der Figur 2 ist ein senkrecht nach unten weisender Pfeil T abgebildet, welcher einen Zeitstrahl darstellt. Links des Pfeiles T sind die Ablaufschritte AS der Ablaufsteuerungsfunktion in der Art eines Ablaufplanes dargestellt, rechts vom Pfeil T sind die Weiterleitungs-Ablaufschritte W-AS der Weiterleitungs-Ablaufsteuerungsfunktion dargestellt. Die Ablaufschritte AS der Ablaufsteuerungsfunktion (die auch als MTC-Dienstlogik bezeichnet wird) werden dann gestartet (linke obere Ecke der Figur 2), wenn die im Zusammenhang mit der Figur 1 erwähnte erste Nachricht N1 den Dienstesteuerungspunkt SCP erreicht (vgl. Figur 1). Als erstes wird eine Operation RRB(answer) ausgeführt, welche einen Event Detection Point Nr. 7 des Basic Call State Models (BCSM) aktiviert. Diese Aktivierung wird auch als Armierung bezeichnet. Bei der Operation RRB(answer) = Request Report BCSM Event(answer) handelt es sich ebenso wie bei später genannten Operationen AC = Apply Charging, CON = Connect, IDP = Initial Detection Point und ERB(answer) = Event Report BCSM(answer) um Operationen, welche im Rahmen des Kommunikationsprotokolls INAP (Intelligent Network Application Protocol) verwendet werden.

Danach wird mittels der Operation AC die Abrechnung der Kommunikationsgebühren für das Kommunikationsendgerät B (vgl. Figur 1) vorbereitet. Im folgenden wird die Operation CON (B) durchgeführt. Diese Operation weist den Dienstevermittlungspunkt SSP an, die Kommunikationsverbindung 5 zu dem Kommunikationsendgerät B aufzubauen. Da jedoch für das Kommunikationsendgerät B ein Anrufweiterleitungsdienst (call forwarding) aktiv ist, wird von dem Dienstevermittlungspunkt SSP nicht die Kommunikationsverbindung 5 aufgebaut (vgl. Figur 1), sondern es wird eine weitere Nachricht N2 an den Dienstesteuerungspunkt SCP gesendet; diese weitere Nachricht N2 sorgt dafür, dass im Dienstesteuerungspunkt SCP die Weiterleitungs-Ablaufschritte W-AS zu laufen beginnen. Dies ist in Figur 2 durch den oberen waagerechten Pfeil 10 symbolisiert, der mit seiner Pfeilspitze auf den Startpunkt der Weiterleitungs-Ablaufschritte W-AS weist. (Bei den Nachrichten N1 und N2 kann es sich z.B. um Nachrichten des Typs InitialDetectionPoint (IDP) handeln.)

Unmittelbar nach Ausführung der Operation CON(B) wird von den Ablaufschritten AS das Block-Flag BFM-F im Dienstesteuerungspunkt SCP gesetzt. Dieses Flag sorgt dafür, dass am Kommunikationsendgerät B kein weiterer Anruf entgegengenommen werden kann (BFM-F = Block Further Mobile Terminating Calls-Flag). Daraufhin warten die Ablaufschritte AS auf das Eintreffen einer Operation ERB (answer) von den Weiterleitungs-Ablaufschritten W-AS.

Die rechtsseitig des Pfeils T dargestellten Weiterleitungs-Ablaufschritte W-AS setzen nach ihrem Start zuerst das Flag CF-F; auf diese Weise wird eine Weiterleitungsinformation gespeichert. Danach wird eine weitere Operation AC zur Vorbereitung der Vergebührung für die Weiterleitungs-Kommunikationsverbindung ausgeführt und im Anschluss daran wird mittels der Operation CON(C) die Weiterleitungs-Kommunikationsverbindung 7 von dem Anrufer-Kommunikationsgerät A über den Dienstevermittlungspunkt SSP zum Ziel-Kommunikationsendgerät C hergestellt. Wenn am Ziel-Kommunikationsendgerät C der Ruf entgegengenommen wird, so wird dies mittels einer Operation ERB(answer) von den Weiterleitungs-Ablaufschritten W-AS an die Ablaufschritte AS mitgeteilt. Dieses ist in Figur 2 durch zwei waagerechte Pfeile 11 und 12 symbolisiert. Die Ablauf schritte AS können aus der Operation ERB(answer) jedoch nicht erkennen, ob der Ruf am Ziel-Kommunikationsendgerät C oder am Kommunikationsendgerät B entgegengenommen wurde; es wird den Ablaufschritten lediglich mitgeteilt, dass der Ruf entgegengenommen wurde.

Nun können die Ablaufschritte AS, die auf das Eintreffen der Operartion ERB(answer) gewartet haben, weiter ausgeführt werden. Nach dem Eintreffen der Operation ERB(answer) wird von den Ablaufschritten das Block-Flag BFM-F zurückgesetzt, so dass nun am Kommunikationsendgerät B weitere Anrufe entgegengenommen werden können.

Nun wird von den Ablaufschritten AS das Flag CF-F ausgewertet. Ist das Flag CF-F gesetzt, so wird von dem Schritt GA1 zur Gebührenabrechnung keine Gebührenabrechnung für das Kommunikationsendgerät B vorgenommen, da ja keine Kommunikationsverbindung 5 zum Kommunikationsendgerät B aufgebaut wurde. In diesem Falle kann das Flag CF-F zurückgesetzt werden, da die Weiterleitungsinformation im weiteren nicht mehr benötigt wird. Danach werden die Ablaufschritte AS beendet. Ist das Flag CF-F jedoch nicht gesetzt, so bedeutet dies, dass kein Anrufweiterleitungsdienst vorlag, demzufolge wurde die Kommunikationsverbindung wie ursprünglich gefordert zu dem Kommunikationsendgerät B aufgebaut und der Schritt GA1 zur Gebührenabrechnung nimmt die Vergebührung der für das Kommunikationsendgerät B gebührenpflichtigen Kommunikationsverbindung 5 vor und belastet das Gebührenkonto GK-B entsprechend. Nach der vorgenommenen Vergebührung werden in diesem Falle die Ablaufschritte AS beendet.

Am Ende der Weiterleitungs-Kommunikationsverbindung 7(wenn beispielsweise am Ziel-Kommunikationsendgerät C die Weiterleitungs-Kommunikationsverbindung 7 beendet wird), wird von den Weiterleitungs-Ablaufschritten W-AS das Flag CF-F zurückgesetzt; danach werden die Weiterleitungs-Ablaufschritte W-AS beendet. Von den Weiterleitungs-Ablaufschritten W-AS kann vor Erreichen ihres Endes eine Vergebührung der Weiterleitungskommunikationsverbindung 7 vorgenommen werden, dieses ist in Figur 2 nicht dargestellt, da diese Vergebührung der normalerweise in derartigen Kommunikationsnetzen anzutreffenden Vergebührung entspricht. Beispielsweise kann das Anrufer-Gebührenkonto GK-A belastet werden.

Das vorstehend beschriebene Verfahren läßt sich auch besonders vorteilhaft in der im Folgenden beschriebenen Situation anwenden (nicht in den Figuren dargestellt): Für das Kommunikationsendgerät B seien in seinem Heimatregister (HLR) Informationen über einen für das Kommunikationsendgerät B eingerichteten "call forwarding not reachable"-Dienst gespeichert. Dieser Dienst sorgt dafür, dass im Falle einer Nichterreichbarkeit des Kommunikationsendgerätes B (weil dieses z.B. ausgeschaltet ist) anstelle der Kommunikationsverbindung 5 die Weiterleitungskommunikationsverbindung 7 aufgebaut wird.

Weiterhin soll vorausgesetzt werden, dass das Kommunikationsendgerät B nicht erreichbar ist. Soll nun eine Kommunikationsverbindung zu dem Kommunikationsendgerät B aufgebaut werden, so führen der Dienstevermittlungspunkt SSP und das Heimatregister (HLR) eine sog. "Camel 2Step Interrogation" durch. Das Ziel der Camel 2Step Interrogation ist es, dem Heimatregister (HLR) eine Telefonnummer (mobile station roaming number MSRN) zu übermitteln, unter der das Kommunikationsendgerät B aktuell erreichbar ist. Nach einem ersten Abfrageschritt der Camel 2Step Interrogation werden im Dienstesteuerpunkt SCP die Ablaufschritte AS gestartet. Danach wird ein zweiter Abfrageschritt der Camel 2Step Interrogation ausgeführt. Dabei übermittelt das Heimatregister HLR an dasjenige Besucherregister VLR, welches bisher für das Kommunikationsendgerät B zuständig war, eine Nachricht PRN (Provide Roaming Number). Da das Kommunikationsendgerät B jedoch nicht erreichbar ist, sendet das Besucherregister VLR anstelle der erwarteten "mobile station roaming number MSRN" eine Fehlermeldung zurück. Das Heimatregister erkennt aus dieser Fehlermeldung, dass nun der "call forwarding not reachable"-Dienst ausgeführt werden muß und veranlaßt den Dienstevermittlungspunkt SSP, durch Senden der Nachricht N2 an den Dienstesteuerpunkt SCP in diesem den Start der Weiterleitungsablaufschritte W-AS auszulösen. In diesem Fall wird als Nachricht N2 eine Nachricht InitialDetectionPoint IDP gesendet. Im weiteren Verlauf der Ablaufschritte AS und Weiterleitungsablaufschritte W-AS gemäß Figur 2 wird nun durch das anmeldungsgemäße Verfahren sichergestellt, dass für die nicht zustandegekommene Kommunikationsverbindung 5 keine Kommunikationsgebühren durch die Ablaufschritte AS abgerechnet werden.

## Patentansprüche

1. Verfahren zum Abrechnen von Telekommunikationsverbindungen in einem Kommunikationsnetz (HPLMN), bei dem
- bei Auftreten einer Aufbauforderung (1) für eine an ein Kommunikationsendgerät (B) gerichtete, für ein Gebührenkonto (GK-B) des Kommunikationsendgerätes (B) gebührenpflichtige Kommunikationsverbindung (5)
- in einem Netzknoten (SCP) des Kommunikationsnetzes (HPLMN) mit einer Ablaufsteuerungsfunktion und einer Weiterleitungs-Ablaufsteuerungsfunktion Ablaufschritte (AS) zum Aufbau der Kommunikationsverbindung (5) vorgenommen werden und
- bei Vorliegen eines Anrufweiterleitungdienstes für das Kommunikationsendgerät (B) in dem Netzknoten (SCP) des Kommunikationsnetzes (HPLMN) Weiterleitungs-Ablaufschritte (W-AS) zum Aufbau einer Weiterleitungs-Kommunikationsverbindung (7) vorgenommen werden,
**dadurch gekennzeichnet, dass**
- während der Weiterleitungs-Ablaufschritte (W-AS) eine Weiterleitungsinformation in einem Speicher-Netzknoten (SCP) des Kommunikationsnetzes (HPLMN) gespeichert wird und
- eine Belastung des Gebührenkontos (GK-B) des Kommunikationsendgerätes (B) mit Kommunikationsgebühren für die Kommunikationsverbindung (5) unterbunden wird, wenn in dem Speicher-Netzknoten (SCP) die Weiterleitungsinformation gespeichert ist.

2. Verfahren nach Anspruch 1,
**dadurch gekennzeichnet, dass**
- bei Beendigung der Ablaufschritte (AS) bei gespeicherter Weiterleitungsinformation diese Weiterleitungsinformation gelöscht wird.

3. Verfahren nach Anspruch 1 oder 2,
**dadurch gekennzeichnet, dass**
- bei Beendigung der Weiterleitungs-Ablaufschritte (W-AS) die Weiterleitungsinformation gelöscht wird.

4. Verfahren nach einem der vorhergehenden Ansprüche,
**dadurch gekennzeichnet, dass**
- die Weiterleitungsinformation gespeichert wird, indem ein dem Kommunikationsendgerät (B) zuordenbares Binär-Speicherelement (CF-F) gesetzt wird und
- die Weiterleitungsinformation gelöscht wird, indem das Binär-Speicherelement (CF-F) rückgesetzt wird.

5. Verfahren nach einem der vorhergehenden Ansprüche,
**dadurch gekennzeichnet, dass**
- als Gebührenkonto (GK-B) ein vorausbezahltes Guthaben-Gebührenkonto (GK-B) verwendet wird.

6. Verfahren nach einem der vorhergehenden Ansprüche,
**dadurch gekennzeichnet, dass**
- als Speicher-Netzknoten (SCP) der Netzknoten (SCP) des Kommunikationsnetzes (HPLMN) mit der Ablaufsteuerungsfunktion und der Weiterleitungs-Ablaufsteuerungsfunktion verwendet wird.

7. Verfahren nach einem der vorhergehenden Ansprüche,
**dadurch gekennzeichnet, dass**
- als Netzknoten (SCP) des Kommunikationsnetzes (HPLMN) mit der Ablaufsteuerungsfunktion und der Weiterleitungs-Ablaufsteuerungsfunktion ein Dienstesteuerpunkt (SCP) verwendet wird, wobei das Kommunikationsnetz (HPLMN) eine Struktur eines Intelligenten Netzes (IN) aufweist.
